# EUROPÄISCHE PATENTANMELDUNG

(11) **EP 4 060 867 A2**
(43) Veröffentlichungstag der Anmeldung: **21.09.2022**
(21) Anmeldenummer: 22158062.4
(22) Anmeldetag: 22.02.2022
(51) Int. Cl.: H02K 1/14

(54) **ELEKTROMOTOR MIT VERBESSERTER MOTORAUSNUTZUNG**

(30) Priorität: 16.03.2021 DE 102021106341
(71) Anmelder: ebm-papst Mulfingen GmbH & Co. KG, 74673 Mulfingen (DE)
(72) Erfinder: Häfner, Jochen, 74572 Blaufelden (DE); Müller, Werner, 74673 Mulfingen-Seidelklingen (DE); Nadig, Stephan, 74639 Zweiflingen-Pfahlbach (DE); Pollok, Erich, 97996 Niederstetten (DE); Sturm, Gerhard, 74673 Mulfingen (DE); BAUN, Martin, 74673 Mulfingen (DE)
(74) Vertreter: Staeger & Sperling Partnerschaftsgesellschaft mbB

(57) **Zusammenfassung**

Die Erfindung betrifft einen Außenläufermotor (1) mit einem Stator (10) mit einem Statorpaket (11), einer drehfest angebrachten Welle (20), die sich in Axialrichtung (A) des Motors erstreckt und einer gegenüber der drehfesten Welle (20) rotierbar angeordneten Rotorglocke (30), wobei die Rotorglocke (30) mittels wenigstens einem ersten statorseitigen Lagerschilds (31) und vorzugsweise einem zweiten rotorseitigen Lagerschild (32) drehbar an der Welle (20) gelagert ist und wobei der Stator (10) modular aufgebaut ist, aufweisend eine Mehrzahl von Einzelzähnen (12) zur Anbringung von Statorwicklungen (16), wobei die Einzelzähne (12) in Umlaufrichtung aneinander und/oder an einem zentralen Statorkörper (17) mittels einer jeweiligen Befestigungskontur (14, 18, 18a, 19, 19a), durch die ein Befestigungsstift (15) verläuft, befestigt sind.

## Beschreibung

Die Erfindung betrifft einen Elektromotor, insbesondere Außenläufermotor, mit einem Stator und einer gegenüber dem Stator rotierbaren Rotorglocke.

Bei schnelldrehenden Elektromotoren und grundsätzlich bei Außenläufermotoren mit einer verbesserten Motorausnutzung ist einerseits eine ausreichende Kühlung von großer Bedeutung, um eine optimale Motorausnützung zu gewährleisten.

Zur Kühlung sind im Stand der Technik für Außenläufermotoren unterschiedlichste Kühlkonzepte bekannt, wobei dann die Motorausnützung in aller Regel nicht optimal ist und ein solcher Motor wirtschaftlich keinen optimalen Betrieb gewährleistet.

Üblicherweise besteht ein Stator bzw. Ständer für einen Elektromotor unter anderem aus einem Statorpaket. Das Statorpaket wird hierzu aus einzelnen Elektroblechen gebildet. Daneben verfügt das Statorpaket über eine Anzahl an Statorzähnen (bzw. Stege), welche sich radial in das Innere des Statorpakets oder bei außen genuteten Statorpaketen radial nach außen erstrecken. Zwischen den einzelnen Statorzähnen befinden sich dabei Zwischenräume in Form von Statornuten. Die Statorzähne dienen dazu Statorspulen aufzunehmen. Ziel ist immer auch eine optimale Kupferfüllung in den Nuten.

Es ist bekannt, bei einem Stator eines Elektromotors eine Wicklung um Zähne eines Blechpakets auszuführen. Zur Herstellung des Blechpakets wird dieses beispielsweise schweißverbunden. Zur elektrischen Isolierung wird zwischen Wicklungsbereich und Blechpaket eine Isolierung eingebracht.

Im Folgenden werden exemplarisch Lösungen dargestellt, die zeigen, dass sich bekannte Maßnahmen bei anderen Motorkonzepten nicht ohne weiteres auf einen Außenläufermotor zur Verbesserung der Motorausnutzung übertragen lassen.

Aus der Patentschrift EP 2 015 426 B ist lediglich beispielhaft ein Stator für eine Antriebsvorrichtung genannt. Ein solcher Stator weist hierbei zwei axiale Statorenden auf, an denen jeweils ein Anschlusselement, beispielsweise ein Lagerschild oder ein Deckel, angeordnet ist. Darüber hinaus besitzt der Stator in seinem Inneren mehrere Statorzähne, die über die gesamte Länge des Stators verlaufen und welche durch Wicklungsnuten unterteilt sind. Ein ganz wesentliches Problem ist dabei die Herstellung dünner Isolationswandstärken. Nachteilig ist bei dicken Isolationen auch der geringere Kupferfüllgrad, so dass solche Konzepte und Lösungen keine Anregung bieten, wie man die Motorausnützung und den Füllgrad eines Außenläufermotors optimieren könnte.

Es gibt im Stand der Technik auch Entwicklungen im Hinblick auf segementierte Statorpakete, die aber eher die Montagefreundlichkeit und Wicklungsmöglichkeit als solche betreffen und weniger die Optimierung der Kupferfüllung und Motorausnützung.

Im Stand der Technik sind hierzu Lösungen bekannt, bei dem zum Beispiel ein Einlegen der Wicklung allerdings nur durch anschließendes oder gleichzeitiges Zusammenfügen von segmentierten Statorsegmenten möglich ist. Das Fügen von segmentierten Statorblechpaketen führt zu einem zusätzlichen Luftspalt in der Verbindungsstelle und häufig auch zu ungewollten elektrischen Verbindungenzwischen verschiedenen Blechebenen der Blechpakete, hervorgerufen zum Beispiel durch einen leichten axialen Versatz oder Gradbildung beim Fügen. Zusätzliche Luftspalte führen zu einem erhöhten Magnetisierungsstrombedarf des Elektroblechs und elektrische Verbindungen zwischen den Blechebenen zu zusätzlichen Wirbelströmen.

Es besteht jedoch ein Bedürfnis, insbesondere bei Außenläufermotoren mit hohen Drehmomenten und hohen Drehzahlen ein optimiertes Gesamtmotorkonzept vorzusehen, so dass neben der Möglichkeit der Unterbringung einer Kühlung insbesondere die Motorausnutzung optimiert wird, was mit sogenannten Standard-Außenläufermotoren mit einer rotierenden Rotorglocke mit den im Stand der Technik bekannten Maßnahmen nicht mehr effizient und wirtschaftlich realisiert werden kann.

Der Erfindung liegt daher die Aufgabe zugrunde, vorbesagte Nachteile im Stand der Technik zu überwinden und einen Elektromotor, insbesondere Außenläufermotor mit einer optimierten Motorausnutzung für hohe Drehmomente bereit zu stellen, dessen Kühlkonzept gleichzeitig verbessert ist.

Diese Aufgabe wird durch die Merkmalskombination gemäß Patentanspruch 1 gelöst.

Erfindungsgemäß wird hierzu ein Elektromotor, insbesondere Außenläufermotor vorgeschlagen, mit einem Stator mit einem Statorpaket, einer drehfest angebrachten Welle, die sich in Axialrichtung A des Motors erstreckt und einer gegenüber der drehfesten Welle rotierbar angeordneten Rotorglocke.

Die Rotorglocke ist mittels wenigstens einem ersten statorseitigen Lagerschilds drehbar an der Welle gelagert und zwischen der Welle und dem Statorpaket ist eine diese verbindende Kühleinrichtung angeordnet, welche bei Drehung des Motors im Betrieb eine Luftzirkulation bewirkt, indem die Kühleinrichtung hierzu eine Vielzahl von axialen Strömungsöffnungen angeordnet in Umfangsrichtung aufweist.

Die Rotorglocke ist vorzugsweise mittels eines zweiten und zwar rotorseitigen Lagerschilds drehbar an der Welle gelagert, so dass eine hohe Laufruhe des Motors gewährleistet ist.

Erfindungsgemäß ist weiter vorgesehen, dass der Stator modular aufgebaut ist, aufweisend eine Mehrzahl von Einzelzähnen zur Anbringung von Statorwicklungen, wobei die Einzelzähne in Umlaufrichtung aneinander und/oder an einem zentralen Statorkörper mittels einer jeweiligen Befestigungskontur durch die bevorzugt ein Befestigungsstift, und zwar besonders bevorzugt ein metallischer Stift verläuft, befestigt sind.

Durch den modularen Aufbau des Statorpakets lassen sich die Einzelzähne bzw. lässt sich der Materialverbrauch des benötigten Dynamoblechmaterials minimieren. Die Stanzabfälle lassen sich im Vergleich zu einem einteiligen Stator deutlich reduzieren. Durch eine umweltfreundliche Imprägnierung des kompletten Stators wird die modulare Ausführung zu einer kompakten Einheit, die den schwingungstechnischen und Lebensdauer bestimmenden Anforderungen nachweislich genügt.

In einer weiteren bevorzugten Ausgestaltung der Erfindung ist vorgesehen, dass an den Einzelzähnen jeweils an einer Seite eine sich in Axialrichtung erstreckende Nut und an einer gegenüberliegenden Seite eine korrespondierend zur Querschnittsform der Nut hervorstehender Steg, Rippe bzw. ein Koppelsteg vorgesehen ist, der ausgebildet ist in die jeweilige Nut an dem unmittelbar benachbarten Einzelzahn einzugreifen, um die jeweiligen Einzelzähne aneinander mechanisch zu koppeln.

Weiter vorteilhaft ist es, wenn innerhalb der Nut in Axialrichtung verlaufende Nutschlitze vorgesehen sind.

In einer weiteren bevorzugten Ausführungsform der Erfindung ist vorgesehen, dass an den Koppelstegen ein oder mehrere außen in Axialrichtung verlaufende Stege hervorstehen, die korrespondierend in ihrer Gestalt und Position so ausgebildet sind, dass diese beim Eingriff des jeweiligen Koppelstegs in eine korrespondierende Nut in die jeweilige Nutschlitze eingreifen. Besonders bevorzugt ist es, wenn der Koppelsteg eine im Wesentlichen hohlzylindrische Form mit einem innenliegenden Kanal aufweist.

In einer ebenfalls bevorzugten Ausführungsform der Erfindung ist vorgesehen, dass

Dabei ist es von Vorteil, wenn die Einzelzähne an ihrer radial nach innen weisenden Seite (der äußeren zum Luftspalt hin gerichteten Stirnseite gegenüberliegende Seite) eine Rippe aufweisen, die zur Verbindung mit einer Kühleinrichtung dient, welche die Einzelzähne mit der Welle verbindet.

Es ist weiter in einer bevorzugten Ausgestaltung des erfinderischen Konzeptes vorgesehen, dass die Kühleinrichtung zwischen der Welle und dem Statorpaket bzw. den Einzelzähne angeordnet ist, derart, dass bei Drehung des Motors im Betrieb eine Kühlung bewirkt wird, indem die Kühleinrichtung hierzu eine Vielzahl von axialen Strömungsöffnungen angeordnet in Umfangsrichtung aufweist.

In einer weiteren bevorzugten Ausgestaltung der Erfindung ist vorgesehen, dass die Einzelzähne einen rechteckigen Querschnitt aufweisen.

Weiter vorteilhaft ist es, wenn die Wickeldrähte der Statorwicklungen zur Erhöhung des Füllfaktors einen rechteckigen Querschnitt aufweisen. Dies ist ein Sonderfall für z. B. extern geformte Wickelspulen, wozu der Zahnfuss bevorzugt modifiziert werden würde, somit nicht breiter ist als der Zahn selbst, so dass die Spule eingeschoben werden könnte.

In einer weiteren bevorzugten Ausführungsform der Erfindung ist vorgesehen, dass die Einzelzähne an ihrer nach Außen in Richtung des Luftspaltes weisenden Stirnseite jeweils an den beiden zum Zahnkopfseitenrand hin weisenden Bereichen eine Ausnehmung aufweisen. Dies erhöht weiter die Laufruhe des Außenläufermotors.

In einer ebenfalls bevorzugten Ausführungsform der Erfindung ist vorgesehen, dass zwischen jeweils zwei Einzelzähnen in deren Kopfbereich im Bereich der Nutöffnungen jeweils ein die beiden Einzelzähne verbindender Nutverschluss vorgesehen ist, wobei der Nutverschluss (z. B. Kunststoff nichtleittend, nichtmagnetisch) mit einer in Querschnittsrichtung betrachteter Labyrinthkontur ausgebildet ist. Dies dient insbesondere dazu, dass noch eventuelle auftretenden Zahnschwingungen durch diesen speziellen Nutsverschluss (Labyrinth mit engem Spalt) in Kombination mit einer Wicklungsimprägnierung zueinander fixiert sind.

Es ist weiter von Vorteil, wenn die Kühleinrichtung einen die Welle verbindenden inneren Ring sowie einen das Statorpaket verbindenden äußeren Ring aufweist und einstückig mit dem inneren Ring und dem äußeren Ring stegförmige sich in Radialrichtung erstreckende Verbindungsabschnitte ausgebildet sind, zwischen denen die Strömungsöffnungen vorgesehen sind. Grundsätzlich sind alle offenbarten Merkmale beliebig kombinierbar, soweit dies technisch möglich und sinnvoll ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen Elektromotor in einer Schnittdarstellung;
- Fig. 2: eine perspektivische Ansicht auf einen Elektromotor mit der Ansichtseite des statorseitigen Lagerschilds;
- Fig. 3: eine Draufsicht auf die Kühleinrichtung zwischen der Welle und dem Statorpaket;
- Fig. 4: eine schematische Ansicht zur Erläuterung des modular aufgebauten Stators als konstruierte Einzelzahnwicklung mit optimierter Kupfermenge;
- Fig. 5: in Ergänzung zur Figur 4 eine Darstellung eines perspektivische Einzelzahn mit optimierter Fügekontur;
- Fig. 6: eine schematische Ansicht zur Erläuterung des Designs eines Einzelzahns mit Zahnformkontur zur Reduzierung der Radialkräfte;
- Fig. 7: eine schematische Ansicht eines Segments mehrerer Zähne mit rechteckigem Querschnitt und
- Fig. 8: ein Nutverschluss zwischen zwei benachbarten Einzelzähnen nach der Idee der vorliegenden Erfindung.

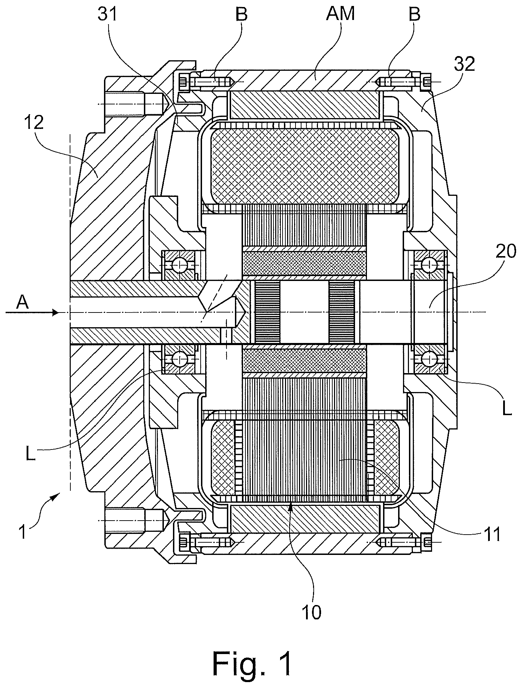

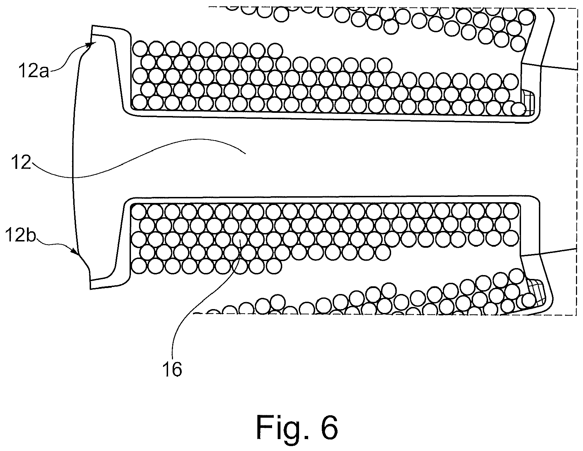

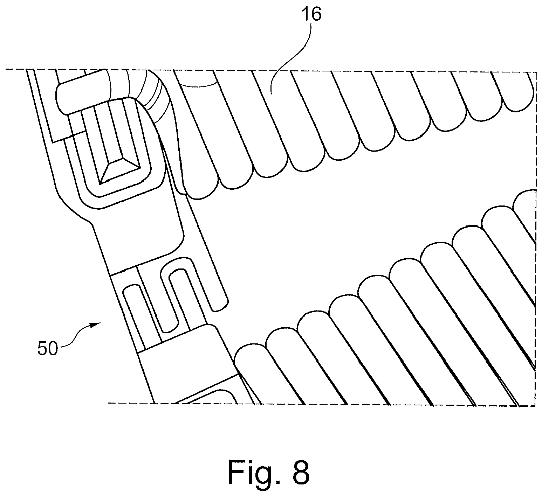

Im Folgenden wird die Erfindung anhand ausgewählter Ausführungsbeispiele mit Bezug auf die Figuren 1 bis 8 näher erläutert, wobei gleiche Bezugszeichen in den Figuren strukturell oder funktional gleiche Teile benennen.

In Figur 1 ist ein erstes Ausführungsbeispiel des Elektromotors 1 ausgebildet als Außenläufermotor in einer Schnittansicht gezeigt. Der Elektromotor 1 ist ein Außenläufermotor mit einem Stator 10 mit einem Statorpaket 11 und einer drehfest angebrachten Welle 20, die sich in Axialrichtung A des Motors erstreckt.

Ferner ist eine Rotorglocke 30 vorgesehen, die gegenüber der drehfesten Welle 20 rotierbar angeordnet. Die Rotorglocke 30 besitzt einen rohrförmigen Außenmantel AM und ein statorseitiges Lagerschild 31, das am Außenmantel der Rotorglocke 30 mit Befestigungsmittel B befestigt ist. Das statorseitiges Lagerschild 31 ist mittels Lager L an der Welle 20 gelagert.

Wie in der Figur 1 weiter ersichtlich ist der Elektromotor 1 mit einem Statorflansch 12 versehen.

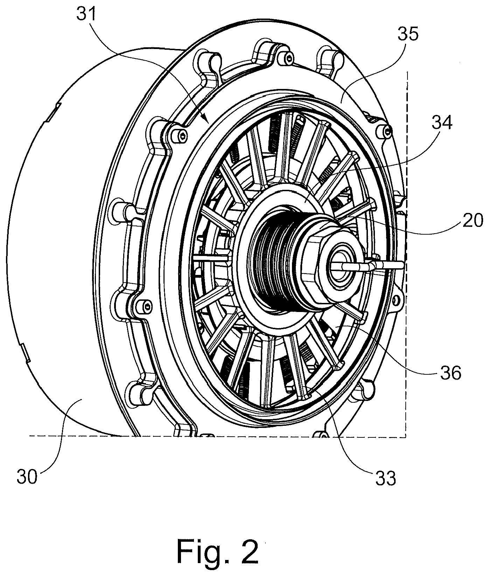

In der Figur 2 findet sich eine perspektivische Ansicht auf einen Elektromotor 1 mit der Ansicht auf das statorseitige Lagerschild 31.

Das statorseitigen Lagerschild 31 ist mit Kühlflügeln ausgebildet, die sich als radial verlaufende Speichen 33 zwischen einem zentralen Lagerabschnitt 34 und einem radial weiter außen liegenden Lagerschildabschnitt 35 erstrecken und zwischen den Speichen 33 sind Öffnungen 36 vorgesehen.

Am Ende der Welle 20 befindet sich ein weiteres Lager L an dem die Rotorglocke 30 über ein zweites und zwar rotorseitiges Lagerschild 32 drehbar gelagert ist. Das rotorseitige Lagerschild 32 ist ebenfalls über Befestigungsmittel B an der Rotorglocke 30 befestigt und weist eine geschlossene Struktur auf, um einen entsprechenden Schutz gegen Umwelteinwirkungen (z. B Schutzgrad IP 54) zu gewährleisten.

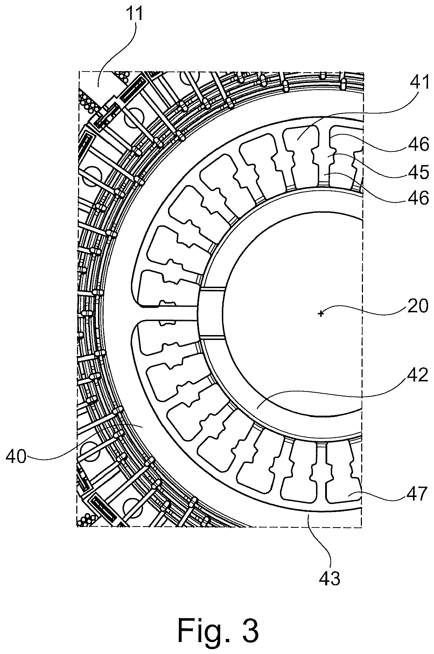

Zwischen der Welle 20 und dem Statorpaket 11 ist eine diese beiden Teile verbindende Kühleinrichtung 40 angeordnet ist. Diese ist konzeptionell so ausgestaltet, dass bei Drehung des Motors im Betrieb eine Kühlung auf den Stator bewirkt wird, indem die Kühleinrichtung 40 hierzu eine Vielzahl von axialen Strömungsöffnungen 41 angeordnet in Umfangsrichtung aufweist. Somit kann ein Luftstrom entlang dem Stator 10 bewirkt werden und eine effiziente Kühlung von innen her erzeugt werden. Das Design ist in der Figur 3 näher gezeigt. Die Kühleinrichtung 40 besitzt einerseits einen die Welle 20 verbindenden inneren Ring 42 sowie einen das Statorpaket 11 verbindenden äußeren Ring 43. Beide Ringe 42, 43 sind einstückig über stegförmige sich in Radialrichtung erstreckende Verbindungsabschnitte 44 miteinander verbunden. Bevorzugt ist das gewählte Material Aluminium oder eine Aluminiumlegierung.

Die Verbindungsabschnitte 44 besitzen einen zentralen Mittenabschnitt 45, der jeweils in Umfangsrichtung breiter ist im Vergleich zur Breite in den benachbarten sich an diesen Mittenabschnitt 45 jeweils beidseitig anschließende Stegabschnitte 46. Die beiden Seiten verlaufen bogenförmig nach innen gekrümmt und besitzen jeweils nasenförmige Eckvorsprünge 47.

Der effektive Querschnitt der Strömungsöffnungen 41 in Axialrichtung betrachtet ist größer, als der Querschnitt der radial zwischen den Strömungsöffnungen 41 befindlichen Bereichen. Somit wird eine gute und effiziente Strömung erreicht.

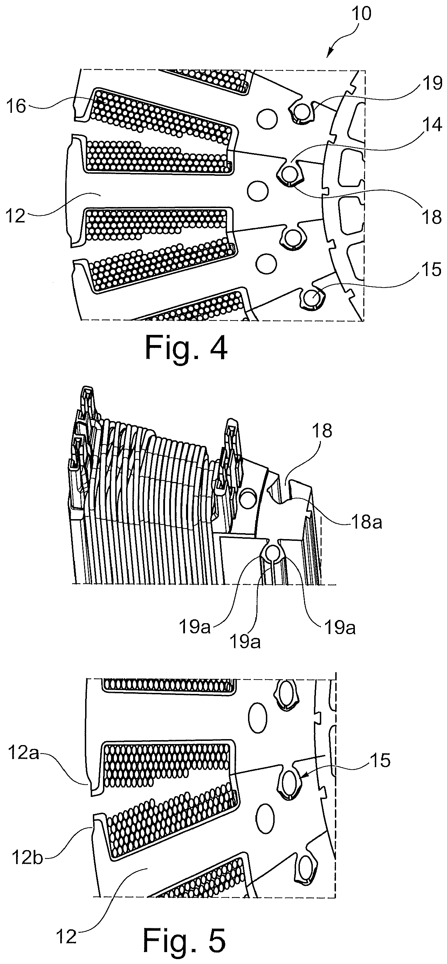

In den Figuren 4 bis 8 sind diverse weitere Kernaspekte der vorliegenden Erfindung gezeigt, die unabhängig von der konstruktiven Ausgestaltung der Erläuterungen zu den Figuren 1 bis 3 zu betrachten sind, aber auch kumulativ mit diesen verwendet werden können, um gleichzeitig ein Kühlkonzept zu realisieren.

Die Figuren 4 und 5 zeigen hierzu eine schematische Ansicht zur Erläuterung des modular aufgebauten Stators 10 als konstruierte Einzelzahnwicklung mit optimierter Kupfermenge. Der Stator 10 wird von einer Mehrzahl von Einzelzähnen 12 zur Anbringung von Statorwicklungen 16 gebildet, wobei die Einzelzähne 12 in Umlaufrichtung aneinander mittels einer jeweiligen Befestigungskontur 15, 18, 18a, 19, 19a ergänzt durch einen Befestigungsstift 15 befestigt sind.

Die Fig. 5 zeigt eine perspektivische Darstellung eines Einzelzahns mit optimierter Fügekontur. Hierzu sind an den Einzelzähnen 12 jeweils an einer Seite eine sich in Axialrichtung erstreckende Nut 18 und an einer gegenüberliegenden Seite eine korrespondierend zur Querschnittsform der Nut 18 hervorstehender Koppelsteg 19 vorgesehen, der ausgebildet ist in die jeweilige Nut 18 an dem unmittelbar benachbarten Einzelzahn 12 einzugreifen, um die jeweiligen Einzelzähne 12 aneinander mechanisch zu koppeln. Ferner ist zu erkennen, dass innerhalb der Nut 18 in Axialrichtung verlaufende Nutschlitze 18a vorgesehen sind. Der Befestigungsstift, vorzugsweise ausgebildet als Stahlstift, ist dabei so geformt, dass er im eingeschobenen Zustand eine Presswirkung und Fixierung zwischen dem Koppelsteg 19 und der Nut 18 erzeugt.

Korrespondierend dazu stehen an den Koppelstegen 19 drei außen in Axialrichtung verlaufende Stege 19a her, die in ihrer Gestalt und Position so ausgebildet sind, dass diese beim Eingriff des jeweiligen Koppelstegs 19 in eine korrespondierende Nut 18 in die jeweilige Nutschlitze 18a eingreifen, wie dies aus der rechten Abbildung der Fig. 5 hervorgeht.

Ferner weisen die Einzelzähne 12 an ihrer radial nach innen weisenden Seite eine Rippe 19a auf, die zur Verbindung mit der Kühleinrichtung 40 dient.

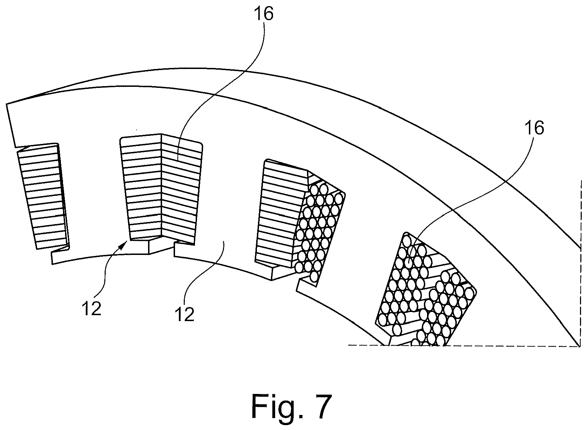

In der Figur 7 sieht man eine schematische Ansicht des Designs der Zähne, wobei die die Einzelzähne 12 einen rechteckigen Querschnitt aufweisen und ferner auch die Wickeldrähte der Statorwicklungen 16 zur Erhöhung des Füllfaktors einen rechteckigen Querschnitt aufweisen.

In der rechten Ansicht der Figur 5 ist ferner ersichtlich, dass die Einzelzähne 12 an ihrer nach Außen in Richtung des Luftspaltes weisenden Stirnseite jeweils an den beiden zum Zahnkopfseitenrand hin weisenden Bereichen eine Ausnehmung 12a, 12b zur Reduzierung der Radialkräfte aufweisen.

Die Figur 7 zeigt ein Ausführungsbeispiel eines speziellen Nutverschlusses. Hierzu ist jeweils zwischen zwei Einzelzähnen 12 in deren Kopfbereich im Bereich der Nutöffnungen 19 jeweils ein die beiden Einzelzähne 12 verbindender Nutverschluss 50 vorgesehen, wobei der Nutverschluss 50 mit einer in Querschnittsrichtung betrachteter Labyrinthkontur ausgebildet ist. Diese Figur soll außerdem aufzeigen, dass der modulare Stator (aus Einzelzähnen bestehend) anstelle von Runddrähten auch mit rechteckförmigen Leitern ausgeführt werden könnte z. B. mit geformten Spulen. Um die extern gefertigten Formspulen aufbringen zu können, müsste der 'Zahnfuss' allerdings jeweils an die Zahnbreite angepasst werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So kann das Lagerschild 32 zum Beispiel auch integral mit der Rotorglocke 30 ausgebildet sein.

## Patentansprüche

1. Außenläufermotor (1) mit einem Stator (10) mit einem Statorpaket (11), einer drehfest angebrachten Welle (20), die sich in Axialrichtung (A) des Motors erstreckt und einer gegenüber der drehfesten Welle (20) rotierbar angeordneten Rotorglocke (30), wobei die Rotorglocke (30) mittels wenigstens einem ersten statorseitigen Lagerschilds (31) und vorzugsweise einem zweiten rotorseitigen Lagerschild (32) drehbar an der Welle (20) gelagert ist und wobei der Stator (10) modular aufgebaut ist, aufweisend eine Mehrzahl von Einzelzähnen (12) zur Anbringung von Statorwicklungen (16), wobei die Einzelzähne (12) in Umlaufrichtung aneinander und/oder an einem zentralen Statorkörper (17) mittels einer jeweiligen Befestigungskontur (15, 18, 18a, 19, 19a), durch die ein Befestigungsstift (15) verläuft, befestigt sind.

2. Außenläufermotor nach Anspruch 1, **dadurch gekennzeichnet, dass** an den Einzelzähnen (12) jeweils an einer Seite eine sich in Axialrichtung erstreckende Nut (18) und an einer gegenüberliegenden Seite eine korrespondierend zur Querschnittsform der Nut (18) hervorstehender Koppelsteg (19) vorgesehen ist, der ausgebildet ist in die jeweilige Nut (18) an dem unmittelbar benachbarten Einzelzahn (12) einzugreifen, um die jeweiligen Einzelzähne (12) aneinander mechanisch zu koppeln.

3. Außenläufermotor nach Anspruch 2, **dadurch gekennzeichnet, dass** innerhalb der Nut (18) in Axialrichtung verlaufende Nutschlitze (18a) vorgesehen sind.

4. Außenläufermotor nach Anspruch 2 oder 3, **dadurch gekennzeichnet, dass** an den Koppelstegen (19) ein oder mehrere außen in Axialrichtung verlaufende Stege (19) hervorstehen, die korrespondierend in ihrer Gestalt und Position so ausgebildet sind, dass diese beim Eingriff des jeweiligen Koppelstegs (19) in eine korrespondierende Nut (18) in die jeweilige Nutschlitze (18a) eingreifen.

5. Außenläufermotor nach einem der vorigen Ansprüche, **dadurch gekennzeichnet, dass** die Einzelzähne (12) an ihrer radial nach innen weisenden Seite eine Rippe (19a) aufweisen, die zur Verbindung mit einer Kühleinrichtung (40) dient, welche die Einzelzähne (12) mit der Welle (20) verbindet.

6. Außenläufermotor nach Anspruch 5, **dadurch gekennzeichnet, dass** die Kühleinrichtung (40) zwischen der Welle (20) und dem Statorpaket (11) bzw. den Einzelzähne (12) angeordnet ist, welche bei Drehung des Motors im Betrieb eine Kühlung bewirkt, indem die Kühleinrichtung (40) hierzu eine Vielzahl von axialen Strömungsöffnungen (41) angeordnet in Umfangsrichtung aufweist.

7. Außenläufermotor nach einem der vorigen Ansprüche, **dadurch gekennzeichnet, dass** die Einzelzähne (12) einen rechteckigen Querschnitt aufweisen.

8. Außenläufermotor nach einem der vorigen Ansprüche, **dadurch gekennzeichnet, dass** die Wickeldrähte der Statorwicklungen (16) zur Erhöhung des Füllfaktors einen rechteckigen Querschnitt aufweisen.

9. Außenläufermotor nach einem der vorigen Ansprüche, **dadurch gekennzeichnet, dass** die Einzelzähne (12) an ihrer nach Außen in Richtung des Luftspaltes weisenden Stirnseite jeweils an den beiden zum Zahnkopfseitenrand hin weisenden Bereichen eine Ausnehmung (12a, 12b) aufweisen.

10. Außenläufermotor nach einem der vorigen Ansprüche, **dadurch gekennzeichnet, dass** zwischen jeweils zwei Einzelzähnen (12) in deren Kopfbereich im Bereich der Nutöffnungen (19) jeweils ein die beiden Einzelzähne verbindender Nutverschluss (50) vorgesehen ist, wobei der Nutverschluss (50) mit einer in Querschnittsrichtung betrachteter Labyrinthkontur ausgebildet ist.

11. Außenläufermotor nach einem der vorigen Ansprüche 6 - 10, **dadurch gekennzeichnet, dass** die Kühleinrichtung (40) einen die Welle (20) verbindenden inneren Ring (42) sowie einen das Statorpaket (11) verbindenden äußeren Ring (43) aufweist und einstückig mit dem inneren Ring (42) und dem äußeren Ring (43) stegförmige sich in Radialrichtung erstreckende Verbindungsabschnitte (44) ausgebildet sind, zwischen denen die Strömungsöffnungen (41) vorgesehen sind.
